# EUROPÄISCHE PATENTSCHRIFT

(11) **EP 4 106 936 B1**
(45) Veröffentlichungstag und Bekanntmachung des Hinweises auf die Patenterteilung: **10.12.2025**
(21) Anmeldenummer: 21705167.1
(22) Anmeldetag: 11.02.2021
(51) Int. Cl.: B22F 10/28, B22F 10/31, B33Y 30/00, B33Y 50/02

(54) **KALIBRIERUNG EINER ANLAGE ZUM SELEKTIVEN PULVERSCHMELZEN**
CALIBRATION OF A SYSTEM FOR SELECTIVE POWDER MELTING
ÉTALONNAGE D'UN SYSTÈME DE FUSION SÉLECTIVE DE POUDRE

(30) Priorität: 17.02.2020 DE 102020201952
(43) Veröffentlichungstag der Anmeldung: 28.12.2022
(73) Patentinhaber: Realizer GmbH, 33178 Borchen (DE)
(72) Erfinder: REDLER, Andreas, 33104 Paderborn (DE); TEPPER, Meinolf, 33378 Rheda-Wiedenbrück (DE); ISENBERG, Daniel, 33098 Paderborn (DE)
(74) Vertreter: Weickmann & Weickmann PartmbB
(86) Internationale Anmeldenummer: PCT/EP2021/053375
(87) Internationale Veröffentlichungsnummer: WO 2021/165145

(56) Entgegenhaltungen:
- EP-A1- 3 482 911
- WO-A1-2017/158327
- DE-A1- 102013 208 651
- US-A1- 2019 134 892

## Beschreibung

Die vorliegende Erfindung betrifft ein Verfahren zum Kalibrieren einer Anlage zum Herstellen von Gegenständen aus einem Werkstoffpulver nach der Methode des selektiven Pulverschmelzens, wobei die Anlage einen Bauraum, welcher dazu vorgesehen ist, das aufzuschmelzende Pulver und den herzustellenden Gegenstand aufzunehmen, eine in den Bauraum in einer höhenverlagerbaren Weise vorgesehene Bauplattenhalterung, welche dazu vorgesehen ist, eine Bauplatte mit dem herzustellenden Gegenstand darauf zu tragen, und eine steuerbare Optikeinheit umfasst, welche wiederum eine Laserquelle, eine Mehrzahl von Linsen und eine Spiegelanordnung mit einer Mehrzahl von einstellbar angeordneten Spiegeln umfasst, welche dazu eingerichtet ist, einen von der Laserquelle ausgestrahlten Laserstrahl selektiv auf einen Punkt in dem Bauraum zu richten, an welchem das Werkstoffpulver aufzuschmelzen ist. Weiterhin betrifft die Erfindung eine solche Anlage, in welcher eine Steuereinheit dazu eingerichtet ist, die steuerbare Optikeinheit zum Durchführen eines derartigen Verfahrens anzusteuern, sowie ein System, gebildet aus einer derartigen Anlage und einer Auslesevorrichtung.

Zum Stand der Technik betreffend das Gebiet des selektiven Pulverschmelzens soll rein beispielhaft auf die DE 199 05 067 A1, die DE 101 12 591 A1, die WO 98/24574 A, die DE 10 2009 038 165 A1, die DE 10 2012 221 641 A1, die EP 2 052 845 A2, die DE 10 2005 014 483 A1 und die WO 2017/084781 A1 verwiesen sein.

Es ist bekannt, dass mit dem Verfahren des selektiven Pulverschmelzens Formkörper, wie etwa Maschinenteile, Werkzeuge, Prothesen, Schmuckstücke usw. entsprechend Geometriebeschreibungsdaten der entsprechenden Formkörper durch schichtweises Aufbauen aus metallischem oder keramischem Werkstoffpulver hergestellt werden können, wobei in einem Herstellungsprozess nacheinander mehrere Pulverschichten übereinander aufgebracht werden und jede Pulverschicht vor dem Aufbringen der nächstfolgenden Pulverschicht mit einem fokussierten Laserstrahl in einem vorgegebenen Bereich, der einem ausgewählten Querschnittsbereich des Modells des Formkörpers entspricht, erhitzt wird, so dass das Werkstoffpulver in den bestrahlten Bereichen zu zusammenhängend verfestigten Abschnitten umgeschmolzen wird.

Aufgrund von unterschiedlichen äußeren und inneren Einflüssen auf die steuerbare Optikeinheit von Anlagen zum Durchführen eines derartigen Verfahrens mit ihren einzelnen Komponenten, wie beispielsweise mechanischen Toleranzen oder Verschiebungen zwischen oder in Komponenten aufgrund von Wärmeausdehnung, kann auf der Schmelzebene eine Positionsabweichung zwischen der von den Spiegeln der Spiegelanordnung anzusteuernden Soll-Position und der tatsächlich vorliegenden Ist-Position auftreten.

Für die Überprüfung und gegebenenfalls Korrektur dieser Ist-Position wird in bisherigen Verfahren mit dem Laserstrahl ein Messraster auf Grundlage von Kalibrationsdaten in ein zu hierzu anzuordnendes Medium, häufig als Scanfeldplatte bezeichnet, eingeschrieben. Das die Ist-Koordinaten repräsentierende Messraster auf der Scanfeldplatte wird anschließend mithilfe einer hierfür vorgesehenen Messanlage vermessen. Basierend auf den derart ermittelten Messwerten wird eine Korrektur in den Kalibrationsdaten zur Ansteuerung der Komponenten der steuerbaren Optikeinheit vorgenommen und in geeigneter Weise in einer Steuereinheit der Anlage hinterlegt. Indem dieser Vorgang mehrfach hintereinander ausgeführt wird, ist es möglich, iterativ die Ist-Koordinaten an ihre Sollwerte anzunähern, sodass bei systematischen Störeinflüssen auf die Ist-Koordinaten nach einer endlichen Anzahl von Iterationen eine beliebig kleine Abweichung zwischen Ist-Koordinaten und Soll-Koordinaten erzielt werden kann. Im Falle von dynamischen Störeinflüssen ist jedoch davon auszugehen, dass aufgrund mangelnder Konvergenz der Iterationsreihe eine größere Anzahl von Iterationen durchgeführt werden muss oder der Prozess gar vereinzelt von neuem gestartet werden muss.

Beispiele für Kalibrationsverfahren in Anlagen zur additiven Fertigung von Objekten sind beispielsweise aus der DE 10 2013 208 651 A1, der WO 2017/158327 A1, der US 2019/134892 A1 und der EP 3 482 911 A1 bekannt.

Es hat sich nun in der Praxis gezeigt, dass der eben beschriebene Kalibrierungsvorgang in verschiedenerlei Hinsicht nachteilbehaftet ist, und es ist die Aufgabe der vorliegenden Erfindung, das aus dem Stand der Technik bekannte Verfahren zum Kalibrieren einer derartigen Anlage vorteilhaft weiterzubilden.

Insbesondere hat sich gezeigt, dass ein wesentlicher dynamischer Störeinfluss in dem oben beschriebenen Verfahren durch die relative Lage bzw. die Positionierungsungenauigkeit zwischen dem optischen System und dem mechanischen System der Anlage gegeben ist. Da die Scanfeldplatte mechanisch in der Anlage positioniert werden muss, um für den Kalibrierungsvorgang durch die steuerbare Optikeinheit bestrahlt werden zu können, kommen nämlich folglich zu den Freiheitsgraden der steuerbaren Optikeinheit, wie beispielsweise der relativen Positionierung ihrer einzelnen Komponenten untereinander, also insbesondere der einstellbar angeordneten Spiegel und der Laserquelle, noch weitere Freiheitsgrade betreffend die Positionierung und Arretierung der Scanfeldplatte relativ hierzu hinzu. Diese zusätzlichen Freiheitsgrade können zu den angesprochenen dynamischen Störeinflüssen führen oder erzeugen wenigstens weitere Toleranzen hinsichtlich sämtlicher Raum- und Rotationsfreiheitsgrade.

Um dieses Problem auszuräumen, umfasst das erfindungsgemäße Verfahren gemäß einem ersten Aspekt der Erfindung die Schritte des Verfahrens gemäß dem unabhängigen Anspruch 1.

Indem erfindungsgemäß nicht mehr eine mechanische, d.h. eine geometrisch absolute, Referenz für das Messraster auf der verwendeten Scanfeldplatte geschaffen wird, sondern unabhängig von der mechanischen Kopplung der Scanfeldplatte in der Anlage optische Referenzpunkte darauf an vordefinierten Positionen gesetzt werden, können die Unsicherheiten durch die mechanischen Freiheitsgrade vollständig eliminiert werden, sodass die Präzision und die Konvergenz des erfindungsgemäßen Verfahrens gegenüber den aus dem Stand der Technik bekannten Verfahren deutlich verbessert wird. Hierbei ist insbesondere festzuhalten, dass die optischen Referenzpunkte unabhängig von den für die Erstellung des Messrasters verwenden Kalibrierungsdaten erzeugt werden und somit unabhängig von dem eigentlichen Kalibrierungsvorgang eine statische Referenz bilden. Indem das erfindungsgemäße Verfahren ferner ein Anpassen des Kalibrierungsdatensatzes auf Grundlage der Bestimmung der relativen Positionierungen umfasst, kann eine direkte Korrektur von Störeinflüssen vorgenommen werden, um in einem nachfolgenden Herstellungsverfahren für einen Gegenstand eine verbesserte Präzision davon erreichen zu können.

Es kann insbesondere ein iteratives Durchführen des erfindungsgemäßen Verfahrens vorgesehen sein, beispielsweise so lange, bis die bestimmten relativen Positionierungen eine oder mehrere vorbestimmte Bedingung/en erfüllen. Hierbei kann bei den vorbestimmten Bedingungen an maximale Abweichungen in einer oder mehreren Raumdimensionen und/oder bezüglich Rotationsfreiheitsgraden gedacht werden oder auch komplexere zusammengesetzte Parameter verwendet werden, in welche beispielsweise die eben genannten Abweichungen mit unterschiedlichen Gewichtungen eingehen können.

Um einen weiteren Unsicherheitsfaktor in dem erfindungsgemäßen Verfahren ausschließen oder verringern zu können, kann wenigstens einer der optischen Referenzpunkte einer Extremstellung oder einer anderen ausgezeichneten Stellung von wenigstens einem der Spiegel der Spiegelanordnung entsprechen und/oder wenigstens einer der Referenzpunkte einem senkrecht auf die Scanfeldplatte einfallenden Strahlengang des Laserstrahls entsprechen. Auf diese Weise können weitere mechanische Unsicherheitsfaktoren bei der Ausrichtung der angesprochenen Spiegel zur Erstellung der Referenzpunkte und/oder optische Abbildungsfehler durch Brechung des Laserstrahls unter einem Winkel an optischen Komponenten im Strahlengang verringert oder ganz eliminiert werden.

Wenngleich das erfindungsgemäße Verfahren theoretisch bereits mit zwei optischen Referenzpunkten durchgeführt werden könnte, so sollten vorzugsweise drei oder mehr optische Referenzpunkte vorgesehen sein, welche insbesondere nicht auf einer Geraden liegen sollten. Hierdurch werden sämtliche Rotationsfreiheitsgrade zwischen der Menge der Referenzpunkte und dem Messraster ausgeschlossen.

Wenngleich das Messraster prinzipiell beliebige Ausprägungen annehmen kann, solange hierdurch ausreichend Informationen über das Verhältnis jeweiliger Soll-Positionen und Ist-Positionen abgeleitet werden können, so zeigt es sich, dass es bevorzugt eine Mehrzahl von durch sich schneidende Linienabschnitte gebildeten Kreuzen umfassen kann, wobei sich die Linienabschnitte weiter vorzugsweise unter einem rechten Winkel schneiden können. Diese Kreuzungspunkte liefern einerseits sehr präzise vermessbare geometrische Datenpunkte und sind andererseits relativ einfach durch Mustererkennung in automatisierten Prozessen erfassbar und auslesbar.

In diesem Zusammenhang kann das erfindungsgemäße Verfahren ferner ein Durchführen des Bestimmens der relativen Positionierungen und des Anpassens des Kalibrierungsdatensatzes in einer automatisierten Weise mithilfe einer Auslesevorrichtung umfassen, welche dazu eingerichtet ist, die relativen Positionierungen unter Verwendung einer Mustererkennung zu bestimmen. Auf diese Weise kann das erfindungsgemäße Verfahren automatisiert durchgeführt werden, was die Effizienz und Präzision davon weiter verbessern kann.

Gemäß einem weiteren Aspekt betrifft die vorliegende Erfindung ein System gemäß dem unabhängigen Anspruch 7.

Hierbei kann insbesondere die steuerbare Optikeinheit ein hermetisch abgeschlossenes Gehäuse umfassen, in welchem wenigstens einige der Mehrzahl von einstellbar angeordneten Spiegeln und wenigstens einige der Mehrzahl von Linsen angeordnet sind, und welches eine transparente Scheibe umfasst, welche ein Eintreten des Laserstrahls aus dem Gehäuse in den Bauraum ermöglicht. Ein derartig abgeschlossenes Gehäuse wird häufig als "Optik-Box" bezeichnet und als einzelne modulare Komponente für gattungsgemäße Anlagen vorgesehen.

Das erfindungsgemäße System ist gebildet aus der Anlage sowie der Auslesevorrichtung, welche dazu eingerichtet ist, die relativen Positionierungen zwischen den optischen Referenzpunkten und dem Messraster zu bestimmen, welche gemäß dem ersten Aspekt der vorliegenden Erfindung dort aufgebracht worden sind.

Hierbei ist die Auslesevorrichtung ferner dazu eingerichtet, automatisch den Kalibrierungsdatensatz auf Grundlage der Bestimmung der relativen Positionierungen anzupassen Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1: eine schematische Ansicht einer Anlage eines erfindungsgemäßen Systems; und
- Fig. 2: eine schematische Ansicht einer in einem erfindungsgemäßen Verfahren in der Anlage aus Figur 1 verwendeten Scanfeldplatte.

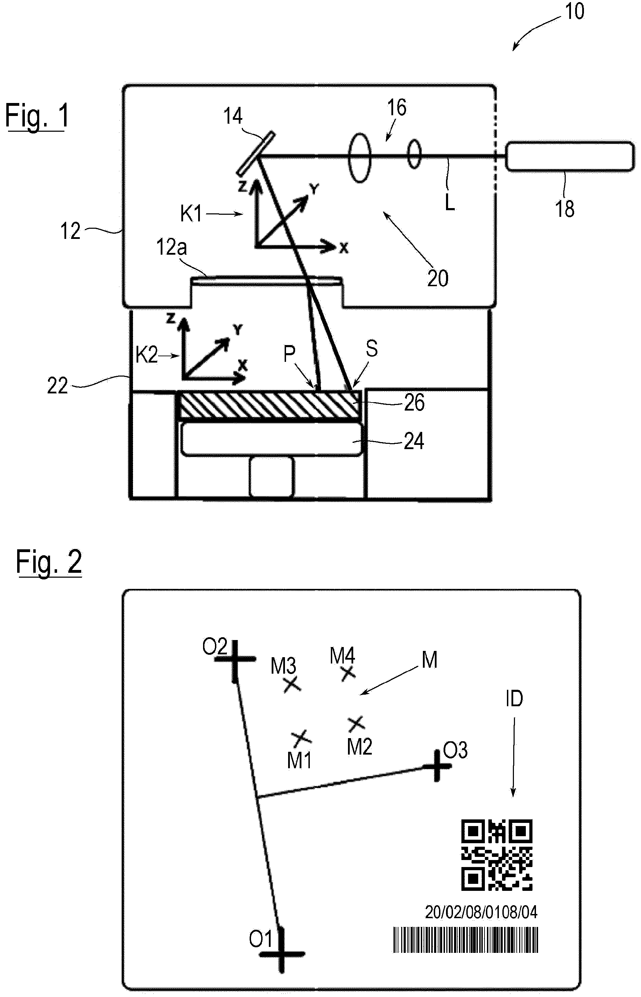

In Figur 1 ist zunächst eine Anlage zum Herstellen von Gegenständen aus einem Werkstoffpulver nach der Methode des selektiven Pulverschmelzens in einer rein schematischen Querschnittsansicht dargestellt und mit dem Bezugszeichen 10 bezeichnet.

Die Anlage 10 umfasst optische und mechanische Komponenten, die in der üblichen Nomenklatur auf diesem Gebiet ein optisches und ein mechanisches System bilden. Hierbei sind die wesentlichen optischen Komponenten in einer sogenannten Optik-Box 12 aufgenommen, die unter anderem eine Mehrzahl von einstellbar angeordneten Spiegeln 14 und ein Linsensystem 16 aufnimmt. Hierbei ist lediglich ein Spiegel 14 aus Gründen der Übersichtlichkeit dargestellt, und auch das Linsensystem 16 ist lediglich schematisch angedeutet. Insgesamt bilden die Spiegel 14 zusammen mit dem Linsensystem 16 und einer extern angeordneten Laserquelle 18, von der ein Laserstrahl in die Optik-Box 12 eingestrahlt wird, eine steuerbare Optikeinheit 20. Indem die Komponenten der Optik-Einheit 20 geeignet von einer nicht dargestellten Steuereinheit angesteuert werden, kann der Laserstrahl L nach Durchlauf durch das Linsensystem 16 und Reflexion an den Spiegeln 14 durch eine transparente Scheibe 12a unter einem Winkel derart aus der Optik-Box 12 heraus in einen Bauraum 22 gerichtet werden, dass er an einer Soll-Position S auf eine Einstrahlebene treffen soll, auf welcher im regulären Betrieb der Anlage 10 ein Werkstoffpulver selektiv aufgeschmolzen werden soll.

Für den vorliegenden Kalibrierungsvorgang ist jedoch keine Bauplatte und auch kein Werkstoffpulver in dem Bauraum 22 auf der höhenverstellbar vorgesehenen Bauplattenhalterung 24 aufgebracht, sondern eine Scanfeldplatte 26. Diese Scanfeldplatte 26 ist aus einem Material gefertigt, in welches durch Einstrahlung des Laserstrahls L Markierungen geschrieben werden können. Hierzu werden beispielsweise eloxierte Aluminiumplatten verwendet, es kann jedoch auch an andere geeignete Materialien gedacht werden, welche ein Schreiben darauf mit einem Laserstrahl erlauben, welcher typischerweise für das Aufschmelzen von Werkstoffpulver in derartigen Anlagen verwendet wird.

In der Darstellung aus Figur 1 trifft der Laserstrahl L jedoch nicht an der Soll-Position S auf die Scanfeldplatte 26 auf, sondern durch verschiedene mögliche Störeffekte an einer tatsächlichen Ist-Position P. Die Abweichung zwischen Soll-Position S und Ist-Position P des Eintreffens des Laserstrahls L an der Scanfeldplatte 26 kann durch geeignete Kalibrierung der Ansteuerung der steuerbaren Optikeinheit 20 verringert werden, wobei zunächst einmal Störungen im Koordinatensystem K1 der steuerbaren Optikeinheit 20 die Abweichung zwischen der Soll-Position S und der Ist-Position P begründen können. Nähme man nun, wie bisher im Stand der Technik üblich, eine absolute Position der an der Ist-Position P entstehenden Markierung durch Einstrahlung des Laserstrahls L an der Scanfeldplatte 26 als Maßstab für die Abweichung zwischen den beiden Positionen, so müssten zusätzlich Störungen im Koordinatensystem K2 des mechanischen Systems berücksichtigt werden, da die Positionierung und auch die Rotationsposition der Scanfeldplatte 26 auf der Bauplattenhalterung 24 sowie weitere Freiheitsgrade, wie beispielsweise die relative Positionierung der Optik-Box 12 zum Bauraum 22, weitere Stör- oder Fehlerquellen darstellen. Da diese mechanischen Störquellen von Messung zu Messung abweichend sein können, handelt es sich hierbei um einen dynamischen systematischen Fehler, welcher dazu führen kann, dass die vorgesehenen iterativen Verfahren nicht oder nicht sinnvoll schnell konvergieren.

Im Gegensatz zu diesem aus dem Stand der Technik bekannten Verfahren wird gemäß der vorliegenden Erfindung die Bestrahlung der Scanfeldplatte 26 derart durchgeführt, dass das in Figur 2 dargestellte Muster auf der Scanfeldplatte 26 erzeugt wird. Hierbei wird zunächst ein optisches Koordinatensystem aus drei optischen Referenzpunkten O1 bis O3 auf der Scanfeldplatte 26 erzeugt, wobei die drei Punkte O1 bis O3 stets an wohldefinierten und nicht einer Kalibrierung unterworfenen Punkten erzeugt werden, welche vorzugsweise derart ausgezeichnet sind, dass wenigstens einer der Spiegel 14 der Optikeinheit 20 in einer Endstellung oder einer anderweitig ausgezeichneten Stellung befindlich ist und/oder der Strahlengang des Laserstrahls L durch die Scheibe 12a und somit das Auftreffen auf die Scanfeldplatte 26 lotrecht erfolgt, um Abbildungsfehler auszuschließen.

Relativ zu dem aus den Punkten O1 bis O3 gebildeten optischen Koordinatensystem werden nun eine Mehrzahl von kreuzförmigen Markierungen M1 bis M4 unter Zuhilfenahme des Kalibrierungsdatensatzes auf die Scanfeldplatte 26 mit dem Laserstrahl L eingeschrieben. Indem zur Erzeugung dieser ein Messraster M bildenden Markierungen M1 bis M4 nun der Kalibrierungsdatensatz von der Steuereinheit der Anlage 10 verwendet wird, welcher insbesondere auch bei einem regulären Betrieb der Anlage 10 verwendet werden würde, kann unabhängig von dem mechanischen System nun die Abweichung zwischen erwarteten Soll-Positionen der Markierungen M1 bis M4 und ihren tatsächlichen Ist-Positionen in einem nachfolgenden Schritt eines Bestimmens dieser relativen Positionierungen ermittelt werden.

Auf Grundlage dieses Ermittelns wird dann ein korrigierter Kalibrierungsdatensatz erstellt, sodass ein iteratives Annähern der Ist-Positionen an die Soll-Positionen in mehreren Schritten erreicht werden kann, wobei das Auslesen der Markierungen M1 bis M4 auf der Scanfeldplatte 26 und auch die anschließende Erstellung eines neuen Kalibrierungsdatensatzes in einer dedizierten externen Auslesevorrichtung durchgeführt werden.

Weiterhin sei darauf hingewiesen, dass auf der Scanfeldplatte 26 ferner Kennungselemente ID mithilfe des Laserstrahls L eingeschrieben worden sind, wobei in der in Figur 2 gezeigten Ausführungsform sowohl ein Strichcode als auch ein QR-Code als auch ein alphanumerischer Code beispielhaft gezeigt sind, während in der Praxis in der Regel nur einer der Codes verwendet werden wird.

Durch dieses Kennungselement können beispielsweise die aktuelle Iteration, eine Seriennummer der Anlage 10 und weitere relevante Daten codiert werden, die dann ebenfalls in einer automatisierten Weise ausgelesen werden können und Bedienerfehler beim Markieren und Handhaben der Scanfeldpatten 26 von aufeinanderfolgenden Iterationen oder verschiedenen Anlagen ausschließen können.

## Patentansprüche

1. Verfahren zum Kalibrieren einer Anlage (10) zum Herstellen von Gegenständen aus einem Werkstoffpulver nach der Methode des selektiven Pulverschmelzens,
wobei die Anlage (10) umfasst:
- einen Bauraum (22), welcher dazu vorgesehen ist, das aufzuschmelzende Werkstoffpulver und den herzustellenden Gegenstand aufzunehmen;
- eine in dem Bauraum (22) in einer höhenverlagerbaren Weise vorgesehene Bauplattenhalterung (24), welche dazu vorgesehen ist, eine Bauplatte mit dem herzustellenden Gegenstand darauf zu tragen; und
- eine steuerbare Optikeinheit (20), wiederum umfassend eine einzelne Laserquelle (18), eine Mehrzahl von Linsen (16) und eine Spiegelanordnung mit einer Mehrzahl von einstellbar angeordneten Spiegeln (14), welche dazu eingerichtet ist, einen von der einzelnen
Laserquelle
(18) ausgestrahlten Laserstrahl (L) selektiv auf einen Punkt (S) in dem Bauraum zu richten, an welchem das Werkstoffpulver aufzuschmelzen ist;
das Verfahren umfassend die folgenden Schritte:
- Platzieren einer Scanfeldplatte (26) auf der Bauplattenhalterung (24) in dem Bauraum (22);
- Erstellen einer Mehrzahl von optischen Referenzpunkten (01-03) auf der Scanfeldplatte (26) an vordefinierten Positionen mit Hilfe der einzelnen Laserquelle (18) der steuerbaren Optikeinheit (20);
- Erstellen eines Messrasters (M) auf der Scanfeldplatte (26) mit Hilfe der steuerbaren Optikeinheit (20) durch entsprechendes Einstellen der Spiegel (14) der Spiegelanordnung anhand eines Kalibrierungsdatensatzes; und
- Bestimmen der relativen Positionierungen zwischen den optischen Referenzpunkten (01-03) und dem Messraster (M);
- -Anpassen des Kalibrierungsdatensatz auf Grundlage der Bestimmung der relativen Positionierungen;
**dadurch gekennzeichnet, dass**
das Erstellen des Messrasters (M) auf der Scanfeldplatte (26) mit Hilfe der einzelnen Laserquelle (18) erfolgt.

2. Verfahren nach Anspruch 1, wobei es iterativ durchgeführt wird, bis die bestimmten relativen Positionierungen eine oder mehrere vorbestimmte Bedingung/en erfüllen.

3. Verfahren nach einem der vorhergehenden Ansprüche, wobei wenigstens einer der optischen Referenzpunkte (01-03) einer Extremstellung von wenigstens einem der Spiegel (14) der Spiegelanordnung entspricht und/oder wobei wenigstens einer der Referenzpunkte (01-03) einem senkrecht auf die Scanfeldplatte (26) einfallenden Strahlengang des Laserstrahls (L) entspricht.

4. Verfahren nach einem der vorhergehenden Ansprüche, wobei drei oder mehr optische Referenzpunkte (01-03) vorgesehen sind, welche vorzugsweise nicht auf einer Geraden liegen.

5. Verfahren nach einem der vorhergehenden Ansprüche, wobei das Messraster (M) eine Mehrzahl von durch sich schneidende Linienabschnitte gebildeten Kreuzen (M1-M4) umfasst, wobei sich die Linienabschnitte vorzugsweise unter einem rechten Winkel schneiden.

6. Verfahren nach einem der vorhergehenden Ansprüche, wobei das Bestimmen der relativen Positionierungen und ggf. das Anpassen des Kalibrierungsdatensatzes automatisiert mit Hilfe einer Auslesevorrichtung durchgeführt wird, welche dazu eingerichtet ist, die relativen Positionierungen unter Verwendung einer Mustererkennung zu bestimmen.

7. System, gebildet aus einer Anlage (10) zum Herstellen von Gegenständen
aus einem Werkstoffpulver nach der Methode des selektiven Pulverschmelzens und einer Auslesevorrichtung, die Anlage (10) umfassend:
- einen Bauraum (22), welcher dazu vorgesehen ist, das aufzuschmelzende Werkstoffpulver und den herzustellenden Gegenstand aufzunehmen;
- eine in dem Bauraum (22) in einer höhenverlagerbaren Weise vorgesehene Bauplattenhalterung (24), welche dazu vorgesehen ist, eine Bauplatte mit dem herzustellenden Gegenstand darauf zu tragen;
- eine steuerbare Optikeinheit (20), wiederum umfassend eine einzelne Laserquelle (18), eine Mehrzahl von Linsen (16) und eine Spiegelanordnung mit einer Mehrzahl von einstellbar angeordneten Spiegeln (14), welche dazu eingerichtet ist, einen von der Laserquelle (18) ausgestrahlten Laserstrahl (L) selektiv auf einen Punkt (S) in dem Bauraum (22) zu richten, an welchem das Werkstoffpulver aufzuschmelzen ist; und
- eine Steuereinheit, welche dazu eingerichtet ist, die steuerbare Optikeinheit (20) zum Durchführen eines Verfahrens nach einem der vorhergehenden Ansprüche anzusteuern, wobei die Auslesevorrichtung dazu eingerichtet ist, die relativen Positionierungen zwischen den optischen Referenzpunkten (O1-O3) und dem Messraster (M) zu bestimmen,
wobei die Auslesevorrichtung ferner dazu eingerichtet ist, automatisch den Kalibrierungsdatensatz auf Grundlage der Bestimmung der relativen Positionierungen anzupassen.

8. System nach Anspruch 7, wobei die steuerbare Optikeinheit (20) ein hermetisch abgeschlossenes Gehäuse (12) umfasst, in welchem wenigstens einige der Mehrzahl von einstellbar angeordneten Spiegeln (14) und wenigstens einige der Mehrzahl von Linsen (16) angeordnet sind, und welches eine transparente Scheibe (12a) umfasst, welche ein Eintreten des Laserstrahls (L) aus dem Gehäuse (12) in den Bauraum (22) hinein ermöglicht.

## Claims

1. Method for calibrating a system (10) for producing objects made of a material powder according to the method of selective powder melting,
wherein the system (10) comprises:
- a build chamber (22) which is intended to accommodate the material powder to be melted and the object to be produced;
- a build plate support (24) which is provided in the build chamber (22) in a height-adjustable manner and is intended to support thereon a build plate having the object to be produced; and
- a controllable optical unit (20), in turn comprising a single laser source (18), a plurality of lenses (16), and a mirror arrangement having a plurality of adjustably arranged mirrors (14), which is configured to selectively direct a laser beam (L) emitted by the single laser source (18) to a point (S) in the build chamber at which the material powder is to be melted;
the method comprising the steps of:
- placing a scanning field plate (26) on the build plate support (24) in the build chamber (22);
- creating a plurality of optical reference points (01-03) on the scanning field plate (26) at predefined positions using the single laser source (18) of the controllable optical unit (20);
- creating a measuring grid (M) on the scanning field plate (26) using the controllable optical unit (20) by correspondingly adjusting the mirrors (14) of the mirror arrangement using a calibration data set; and
- determining the relative positionings between the optical reference points (O1-O3) and the measuring grid (M);
- adjusting the calibration data set on the basis of the determination of the relative positionings;
**characterized in that** the creating of the measuring grid (M) on the scanning field plate (26) is performed using the single laser source (18).

2. Method according to claim 1, wherein it is carried out iteratively until the determined relative positionings meet one or more predetermined conditions.

3. Method according to any of the preceding claims, wherein at least one of the optical reference points (01-03) corresponds to an extreme position of at least one of the mirrors (14) of the mirror arrangement and/or wherein at least one of the reference points (01-03) corresponds to a beam path of the laser beam (L) that is incident perpendicularly to the scanning field plate (26).

4. Method according to any of the preceding claims, wherein three or more optical reference points (01-03) are provided, which preferably do not lie on a straight line.

5. Method according to any of the preceding claims, wherein the measuring grid (M) comprises a plurality of crosses (M1-M4) formed by intersecting line portions, wherein the line portions preferably intersect at a right angle.

6. Method according to any of the preceding claims, wherein the determination of the relative positionings and, if necessary, the adjustment of the calibration data set is carried out in an automated manner using a readout device which is configured to determine the relative positionings using pattern recognition.

7. Assembly, formed from a system (10) for producing objects made of a material powder according to the method of selective powder melting and a readout device, the system (10) comprising:
- a build chamber (22) which is intended to accommodate the material powder to be melted and the object to be produced;
- a build plate support (24) which is provided in the build chamber (22) in a height-adjustable manner and is intended to support thereon a build plate having the object to be produced;
- a controllable optical unit (20), in turn comprising a single laser source (18), a plurality of lenses (16), and a mirror arrangement having a plurality of adjustably arranged mirrors (14), which is configured to selectively direct a laser beam (L) emitted by the laser source (18) to a point (S) in the build chamber (22) at which the material powder is to be melted; and
- a control unit which is configured to control the controllable optical unit (20) for carrying out a method according to any of the preceding claims,
wherein the readout device is configured to determine the relative positionings between the optical reference points (01-03) and the measuring grid (M), wherein the readout device is further configured to automatically adjust the calibration data set on the basis of the determination of the relative positionings

8. Assembly according to claim 7, wherein the controllable optical unit (20) comprises a hermetically sealed housing (12) in which at least some of the plurality of adjustably arranged mirrors (14) and at least some of the plurality of lenses (16) are arranged, and which comprises a transparent pane (12a) which allows the laser beam (L) to enter the build chamber (22) from the housing (12).

## Revendications

1. Un procédé pour calibrer une installation (10) destinée à fabriquer des objets à partir d'une poudre de matériau selon la méthode de fusion sélective de poudre, l'installation (10) comprenant :
- un espace de construction (22) qui est prévu pour recevoir la poudre de matériau à fondre et l'objet à fabriquer ;
- un support de plaque de construction (24) prévu dans l'espace de construction (22) de manière à pouvoir être déplacé en hauteur, qui est prévu pour supporter une plaque de construction avec l'objet à fabriquer dessus ; et
- une unité optique commandable (20), comprenant à son tour une source laser unique (18), une pluralité de lentilles (16) et un agencement de miroirs comprenant une pluralité de miroirs (14) disposés de manière réglable, qui est conçu pour diriger de manière sélective un faisceau laser (L) émis par la source laser unique (18) vers un point (S) dans l'espace de construction où la poudre de matériau doit être fondue ;
le procédé comprenant les étapes suivantes :
- placer une plaque de champ de balayage (26) sur le support de plaque de construction (24) dans l'espace de construction (22) ;
- créer une pluralité de points de référence optiques (01-03) sur la plaque de champ de balayage (26) à des positions prédéfinies à l'aide de la source laser unique (18) de l'unité optique contrôlable (20) ;
- création d'une grille de mesure (M) sur la plaque de champ de balayage (26) à l'aide de l'unité optique contrôlable (20) en réglant de manière appropriée les miroirs (14) de l'agencement de miroirs à l'aide d'un ensemble de données de calibrage ; et
- déterminer les positionnements relatifs entre les points de référence optiques (O1-O3) et la grille de mesure (M) ;
- adapter l'ensemble de données de calibrage sur la base de la détermination des positionnements relatifs ;
**caractérisé en ce que** la création de la grille de mesure (M) sur la plaque de champ de balayage (26) s'effectue à l'aide de la source laser unique (18).

2. Le procédé selon la revendication 1, dans lequel il est effectué de manière itérative jusqu'à ce que les positions relatives déterminées remplissent une ou plusieurs conditions prédéterminées.

3. Le procédé selon l'une des revendications précédentes, dans lequel au moins l'un des points de référence optiques (01-03) correspond à une position extrême d'au moins l'un des miroirs (14) de l'agencement de miroirs et/ou dans lequel au moins l'un des points de référence (01-03) correspond à un trajet du faisceau laser (L) incident perpendiculairement sur la plaque de champ de balayage (26).

4. Le procédé selon l'une des revendications précédentes, dans lequel trois points de référence optiques (01-03) ou plus sont prévus, qui ne sont de préférence pas situes sur une droite.

5. Le procédé selon l'une des revendications précédentes, dans lequel la grille de mesure (M) comprend une pluralité de croix (M1-M4) formées par des segments de lignes qui se croisent, les segments de lignes se croisant de préférence à angle droit.

6. Le procédé selon l'une des revendications précédentes, dans lequel la détermination des positions relatives et, le cas échéant, l'ajustement de l'ensemble de données de calibrage sont effectués de manière automatisée à l'aide d'un dispositif de lecture qui est conçu pour déterminer les positions relatives à l'aide d'une reconnaissance de formes.

7. Un système formé d'une installation (10) pour la fabrication d'objets à partir d'une poudre de matériau selon le procédé de fusion sélective de poudre et d'un dispositif de lecture, l'installation (10) comprenant :
- un espace de construction (22) prévu pour recevoir la poudre de matériau à fondre et l'objet à fabriquer ;
- un support de plaque de construction (24) prévu dans l'espace de construction (22) de manière à pouvoir être déplacé en hauteur, qui est prévu pour supporter une plaque de construction avec l'objet à fabriquer dessus ;
- une unité optique commandable (20), comprenant à son tour une source laser unique (18), une pluralité de lentilles (16) et un agencement de miroirs comprenant une pluralité de miroirs (14) disposés de manière réglable, qui est conçu pour diriger de manière sélective un faisceau laser (L) émis par la source laser (18) vers un point (S) dans l'espace de construction (22) où la poudre de matériau doit être fondue ; et
- une unité de commande qui est conçue pour commander l'unité optique commandable (20) afin d'exécuter un procédé selon l'une des revendications précédentes, le dispositif de lecture étant conçu pour déterminer les positions relatives entre les points de référence optiques (01-03) et la grille de mesure (M),
dans lequel le dispositif de lecture est en outre conçu pour adapter automatiquement l'ensemble de données de calibrage sur la base de la détermination des positionnements relatifs.

8. Le système selon la revendication 7, dans lequel l'unité optique commandable (20) comprend un boîtier hermétiquement fermé (12) dans lequel sont disposés au moins certains de la pluralité de miroirs (14) disposés de manière réglable et au moins certaines de la pluralité de lentilles (16), et qui comprend une vitre transparente (12a) qui permet au faisceau laser (L) de passer du boîtier (12) à l'espace de construction (22).
